# EUROPÄISCHE PATENTSCHRIFT

(11) **EP 3 540 237 B1**
(45) Veröffentlichungstag und Bekanntmachung des Hinweises auf die Patenterteilung: **05.05.2021**
(21) Anmeldenummer: 18161547.7
(22) Anmeldetag: 13.03.2018
(51) Int. Cl.: F04D 19/04, F04D 29/60

(54) **EINFACH BEDIENBARE FLANSCHVERBINDUNG FÜR VAKUUMVORRICHTUNG**
EASILY USEABLE FLANGE CONNECTION FOR VACUUM DEVICE
CONNECTION DE BRIDES D'USAGE FACILE POUR DISPOSITIF À VIDE

(43) Veröffentlichungstag der Anmeldung: 18.09.2019
(73) Patentinhaber: PFEIFFER VACUUM GMBH, 35614 Asslar (DE)
(72) Erfinder: Stoll, Tobias, 35644 Hohenahr (DE); Schweighöfer, Michael, 35641 Schöffengrund (DE)
(74) Vertreter: Manitz Finsterwald Patent- und Rechtsanwaltspartnerschaft mbB

(56) Entgegenhaltungen:
- EP-A1- 2 868 929
- WO-A1-95/28596
- JP-A- 2004 137 975

## Beschreibung

Die vorliegende Erfindung betrifft eine Vakuumvorrichtung, insbesondere eine Vakuumpumpe. Ebenso betrifft die Erfindung ein Verfahren zum Herstellen einer Flanschverbindung.

Bei Vakuumanwendungen können Verbindungen, insbesondere Gasverbindungen, zwischen unterschiedlichen Vorrichtungen erforderlich sein, beispielsweise zwischen einer Hochvakuumpumpe und einer Vorvakuumpumpe. Derartige Verbindungen werden üblicherweise durch eine Flanschverbindung hergestellt, insbesondere über eine sogenannte ISO-Kleinflanschverbindung (ISO-KF).

Zur Verbindung eines Kleinflansches werden beispielsweise Spannpratzen eingesetzt. Hierbei handelt es sich um Spannelemente, die jeweils mittels einer Befestigungsschraube an der fraglichen Vorrichtung befestigt und durch Festziehen den jeweiligen Flansch fixieren. Zur Fixierung eines Flansches sind jedoch mehrere solcher Spannpratzen erforderlich, was mit einem hohen Handhabungsaufwand verbunden ist. Dies gilt insbesondere für den Fall beengter Platzverhältnisse im Bereich des jeweils zu verbindenden Flansches. Hinzu kommt, dass durch den Einsatz von Spannpratzen eine elektrisch leitfähige Verbindung zwischen den zu verbindenden Vorrichtungen beziehungsweise dem jeweils einzusetzenden Flansch erzeugt wird, wodurch die Gefahr von Funkenbildung beziehungsweise Störungen oder elektrischer Kurzschlüsse erhöht wird.

Die EP 2 868 929 A, die JP 2004 137975 A und die WO 95 / 28596 A1 offenbaren verschiedene Verbindungseinrichtungen zur Verbindung einer Vakuumvorrichtung mit einer weiteren Vorrichtung.

Vor diesem Hintergrund hat der vorliegenden Erfindung die Aufgabe zugrunde gelegen, eine Vakuumvorrichtung anzugeben, an der mit nur geringem Handhabungsaufwand ein Flansch zwecks Herstellung einer Verbindung mit einer weiteren Vorrichtung fixiert beziehungsweise befestigt werden kann. Ebenso bestand die Aufgabe darin, die Montage beziehungsweise Betriebssicherheit einer solchen Vakuumvorrichtung zu verbessern. Schließlich bestand die Aufgabe darin, eine ein Verfahren zum Herstellen einer Flanschverbindung anzugeben.

Die Aufgabe wird durch die Gegenstände der unabhängigen Ansprüche gelöst. Vorteilhafte Ausgestaltungen sind in den abhängigen Ansprüchen spezifiziert und werden nachfolgend erörtert.

Bei einer erfindungsgemäßen Vakuumvorrichtung kann es sich insbesondere um eine Vakuumpumpe, ein Vakuumessgerät, ein Vakuumanalysegerät, ein Lecksuchgerät oder ein Vakuumkammergerät handeln. Eine Vakuumpumpe kann in vorteilhafter Weise als Turbomolekularpumpe ausgebildet sein. Solche Turbomolekularpumpe werden beispielsweise als Hochvakuumpumpe eingesetzt. Ebenso kann es sich bei einer Vakuumpumpe um eine Vorvakuumpumpe handeln, insbesondere für eine Pumpenanordnung, die auch eine Turbomolekularpumpe aufweist.

Eine erfindungsgemäße Vakuumvorrichtung weist zumindest einen Anschlussabschnitt auf, an dem ein Einlass oder Auslass zur Herstellung einer Verbindung mit einer weiteren Vorrichtung ausgebildet ist. Bei einer solchen Verbindung kann es sich insbesondere um eine Gasverbindung handeln, bevorzugt um eine vakuumdichte Gasverbindung.

Ferner ist eine erfindungsgemäße Vakuumvorrichtung mit einer Verbindungseinrichtung zur Verbindung eines Flansches mit dem Anschlussabschnitt ausgestattet. Die erfindungsgemäß vorgesehene Verbindungseinrichtung weist dabei zumindest ein Verbindungselement und zumindest zwei an dem Anschlussabschnitt angeordnete Befestigungselemente für das Verbindungselement auf. Demnach kann ein einzelnes Verbindungselement über zwei Befestigungselemente an dem Anschlussabschnitt befestigt werden.

Erfindungsgemäß ist nun vorgesehen, dass das Verbindungselement an dem einen der Befestigungselemente schwenkbar gelagert und durch Verschwenken in eine den Flansch am Anschlussabschnitt fixierende Fixierstellung mit dem anderen der Befestigungselemente in einen Befestigungseingriff versetzbar ist. Dementsprechend kann das Verbindungselement lediglich durch Verschwenken mit dem anderen bereits an dem Anschlussabschnitt vorgesehenen Befestigungselement in Befestigungseingriff gebracht werden.

Unter Fixierstellung soll hier ein zumindest vorläufiges Halten eines Flansches am Anschlussabschnitt verstanden werden, insbesondere ohne zusätzlich manuelles Festhalten durch eine Bedienperson. Ein solches vorläufiges Halten kann den Handhabungsaufwand bis zum Erzielen einer endgültigen Befestigung erleichtern. Ebenso kann es sich bei einer Fixierstellung bereits um die endgültige Befestigungsstellung handeln.

Unter Befestigungseingriff soll hier verstanden werden, dass einerseits die Fixierstellung des Flansches am Anschlussabschnitt aufrechterhalten werden kann, also ohne manuelles Festhalten durch eine Bedienperson. Gleichzeitig kann bei einem Befestigungseingriff in vorteilhafter Weise eine endgültige Befestigung des Verbindungselements an dem Anschlussabschnitt ermöglicht werden, insbesondere zwecks Herstellung einer gasdichten, bevorzugt einer vakuumdichten Verbindung zwischen dem Flansch und dem jeweiligen Anschlussabschnitt. Ein erfindungsgemäßer Befestigungseingriff umfasst jedoch auch den Fall einer endgültigen Befestigungsstellung des jeweiligen Befestigungselements relativ zum Verbindungselement und/oder relativ zum Anschlussabschnitt.

Insgesamt wird durch eine erfindungsgemäße Vakuumvorrichtung die Möglichkeit geschaffen, ein bereits am Anschlussabschnitt angeordnetes Befestigungselement nachträglich in einen Befestigungseingriff mit einem Verbindungselement zu bringen. Es kann also mit nur einem Handgriff, nämlich der Bewegung des Verbindungselements in eine Fixierstellung, der jeweilige Flansch am Anschlussabschnitt fixiert werden, insbesondere vorläufig fixiert werden.

Auf diese Weise kann vermieden werden, dass ein Flansch am Anschlussabschnitt händisch gehalten werden muss und zur Befestigung des Flansches am Anschlussabschnitt noch aufwendige Einfädelungsarbeiten von Befestigungselementen am Anschlussabschnitt vorzunehmen sind. Die Gefahr des Herunterfallens einzelner Komponenten und deren Beschädigung kann somit verringert werden. In der Folge lässt sich der Handhabungsaufwand reduzieren.

Gemäß einer bevorzugten Ausgestaltung der Vakuumvorrichtung ist das Verbindungselement verliersicher am Anschlussabschnitt angeordnet. Dabei kann das Verbindungselement beispielsweise über eines der Befestigungselemente verliersicher am Anschlussabschnitt angeordnet sein, insbesondere über das Befestigungselement, um das eine schwenkbare Lagerung vorgesehen ist. Dementsprechend kann eines der Befestigungselemente dazu eingesetzt werden, eine verliersichere Anordnung des Verbindungselements an dem Anschlussabschnitt vorzusehen.

Bei der verliersicheren Anordnung des Befestigungselements am Anschlussabschnitt kann es sich insbesondere um eine vormontierte Stellung handeln. Hierdurch kann der Handhabungsaufwand weiter verringert werden. Insbesondere kann auf diese Weise ein manuelles Halten des Verbindungselements am Anschlussabschnitt vermieden beziehungsweise die relative Positionierung zwischen Verbindungselement und Anschlussabschnitt im Vorfeld einer Befestigung vereinfacht werden.

Gemäß einer weiter bevorzugten Ausgestaltung ist das Verbindungselement in einer verliersicheren Anordnung an dem Anschlussabschnitt zwischen einer Freigabestellung und der Fixierstellung schwenkbar, insbesondere schwenkbar geführt, wobei in der Freigabestellung der Flansch an dem Anschlussabschnitt positionierbar und in der Fixierstellung an dem Anschlussabschnitt fixiert ist, insbesondere vorläufig fixiert ist. In der Freigebestellung kann demnach ein Flansch derart an dem Anschlussabschnitt anliegend positioniert werden, dass durch Bewegung des Verbindungselements in die Fixierstellung eine zumindest vorläufige Fixierung des Flansches erzeugt wird. Durch die schwenkbare Anordnung des Verbindungselements an dem Anschlussabschnitt beziehungsweise durch die schwenkbare Führung kann der manuelle Aufwand bis zum Erreichen einer Fixierstellung weiter verringert werden. Die Gefahr von Fehlpositionierungen oder fehlerhaften Montagestellungen wird weiter verringert, da die Bewegung des Verbindungselements zwischen einer Freigabestellung und einer Fixierstellung vorgegeben sein kann.

Das Verbindungselement kann folglich um eines der Befestigungselemente herum zwischen einer Freigabestellung und der Fixierstellung schwenkbar sein. Eines der ohnehin vorgesehenen Befestigungselemente für die Befestigung des Verbindungselements am Anschlussabschnitt kann somit auch für die verliersichere Anordnung am Anschlussabschnitt beziehungsweise für eine vormontierte Stellung des Verbindungselements am Anschlussabschnitt dienen. Der konstruktive Aufwand kann somit weiter verringert werden.

Erfindungsgemäß weist das Verbindungselement wenigstens zwei Aufnahmeabschnitte für die Befestigungselemente auf, wobei zumindest einer der Aufnahmeabschnitte eine Öffnung mit einer Umfangsunterbrechung aufweist. Es kann weiter von Vorteil sein, wenn einer der Aufnahmeabschnitte eine Öffnung mit geschlossenem oder im Wesentlichen geschlossenem Umfang aufweist.

Eine Öffnung mit einer Umfangsunterbrechung kann das Einführen eines Befestigungselements ermöglichen, welches bereits an dem Anschlussabschnitt angeordnet ist. Ein Befestigungselement kann somit seitlich in die Öffnung eingeführt werden, mit anderen Worten quer zu einer Längsachse der Öffnung beziehungsweise quer zu einer Längserstreckung der Öffnung. Es kann sich bei der Umfangsunterbrechung um einen Schlitz handeln, der sich bis zum schmalen Rand des Verbindungselements erstreckt. Ein solcher Schlitz kann insbesondere im Hinblick auf die Abmessungen des jeweiligen Befestigungselements dimensioniert sein. Durch das Vorsehen einer Öffnung mit Umfangsunterbrechung kann mit nur geringem Handhabungsaufwand ein Befestigungseingriff zwischen dem Verbindungselement und einem Befestigungselement erzielt werden.

Demgegenüber gewährleistet ein Aufnahmeabschnitt mit einer Öffnung, die einen geschlossenen oder einen im Wesentlichen geschlossenen Umfang aufweist, dass das Verbindungselement beispielsweise über ein Befestigungselement verliersicher und/oder schwenkbar an dem Anschlussabschnitt angeordnet werden kann. Es kann durch den geschlossenen Umfang beziehungsweise den im Wesentlichen geschlossenen Umfang gewährleistet werden, dass sich das Befestigungselement nicht seitlich beziehungsweise quer zur Längserstreckung der Öffnung herauslösen lässt. Unter im Wesentlichen geschlossenem Umfang soll hier verstanden werden, dass etwaige Umfangsunterbrechungen zum Herausführen eines zweckbestimmten Befestigungsmittels ungeeignet sind oder das Herausführen verhindern.

Es kann weiterhin von Vorteil sein, wenn das Verbindungselement für das zumindest abschnittsweise Umgreifen des Flansches ausgebildet ist, wodurch eine hohe Befestigungs- beziehungsweise Fixiersicherheit erreicht werden kann. Dabei kann das Verbindungselement den Flansch in der Fixierstellung zumindest abschnittsweise umgreifen, insbesondere um mehr als 90°, bevorzugt um mehr als 120°, weiter bevorzugt um mehr als 150°, insbesondere um etwa 180° umgreifen. Die formschlüssige Fixierung beziehungsweise endgültige Befestigung des Flanschs an dem Anschlussabschnitt kann hierdurch einfach und mit hoher Sicherheit bewerkstelligt werden.

Weiter bevorzugt kann das Verbindungselement bogenförmig und/oder C-förmig ausgebildet sein. Dabei kann die bogenförmige und/oder C-förmige Ausgestaltung zumindest abschnittsweise mit gleichbleibendem Radius ausgestaltet sein. Die Bogenform beziehungsweise die C-Form kann insbesondere an die Umfangsdimension beziehungsweise an die Umfangsform des jeweils zu verbindenden und/oder fixierenden Flansches angepasst sein. Hierdurch kann die Befestigungssicherheit weiter erhöht werden.

Weiterhin können Aufnahmeabschnitte für die Befestigungselemente an den Enden des Verbindungselements ausgebildet sein, was eine besonders vorteilhafte Kraftübertragung zwischen dem Verbindungselement, dem jeweiligen Flansch sowie dem Anschlussabschnitt ermöglicht. Dabei kann eine Umfangsunterbrechung einer Öffnung eines Aufnahmeabschnitts an einem freien Ende des Verbindungselements ausgebildet sein. Das jeweilige freie Ende des Verbindungselements kann dementsprechend als maulartige Aufnahme für ein Befestigungselement ausgestaltet sein. Auf diese Weise kann das Verbindungselement mit geringem manuellen Aufwand in eine Fixierstellung geschwenkt und hierbei ein einfaches Einfädeln eines Befestigungselements durch die Umfangsunterbrechung hindurch in die jeweilige Öffnung des Aufnahmeabschnitts erfolgen. Die Handhabungsfreundlichkeit wird hierdurch weiter verbessert.

Gemäß einer weiteren vorteilhaften Ausgestaltung kann das Verbindungselement symmetrisch ausgebildet sein, insbesondere bezüglich einer Symmetrieebene, die mit einer Bewegungsebene, entlang der das Verbindungselement in die Fixierstellung bewegbar und/oder an dem Anschlussabschnitt beweglich geführt und/oder schwenkbar angerordnet ist, zusammenfällt. Ebenso kann die Symmetrieebene parallel zur Bewegungsebene verlaufen. Ebenso kann das Verbindungselement auch asymmetrisch bezüglich einer senkrecht zur Bewegungsebene verlaufenden Symmetrieebene ausgebildet sein. Dies gilt insbesondere im Hinblick auf unterschiedlich ausgestaltete Aufnahmeabschnitte an den gegenüberliegenden Enden des Verbindungselements.

Das Verbindungselement kann auch allgemein derart symmetrisch ausgebildet sein, dass es in unterschiedlichen Orientierungen befestigbar ist, insbesondere am Anschlussabschnitt. Je nach Platzverhältnissen oder Zugänglichkeit kann das Verbindungselement zum Schwenken im Uhrzeigersinn oder gegen den Uhrzeigersinn für das Erreichen einer Fixierstellung angeordnet sein. Die Einsatzflexibilität des Verbindungselements wird auf diese Weise insgesamt verbessert.

Gemäß einer weiteren Ausgestaltung können die Befestigungselemente als Schrauben ausgebildet und in Gewindebohrungen des Anschlussabschnitts eingeschraubt sein. Dies ist kostengünstig zu bewerkstelligen und gewährleistet ein hohes Maß an Funktionssicherheit. Ferner kann durch Festziehen der Schrauben in der Fixierstellung des Verbindungselements der Flansch endgültig mit dem Anschlussabschnitt verbindbar sein, insbesondere zur Herstellung einer vakuumdichten Verbindung zwischen dem Flansch und dem Anschlussabschnitt. Da in einer Fixierstellung der jeweilige Flansch bereits am Anschlussabschnitt fixiert ist, insbesondere vorläufig fixiert ist, kann das Festziehen der Schrauben ohne manuelles Halten des jeweiligen Flansches durchgeführt werden, wodurch die Montagefreundlichkeit verbessert und somit der Montageaufwand verringert werden kann.

Gemäß einer weiteren Ausgestaltung kann das Verbindungselement zumindest abschnittsweise aus einem elektrisch isolierenden Material hergestellt sein.

Durch Verwendung eines elektrisch isolierenden Materials für das Verbindungselement kann die Gefahr von Kurzschlüssen zwischen den jeweils zu verbindenden Vorrichtungen beziehungsweise die Gefahr von Funkenbildung während des Montagevorgangs verringert werden. Dies gilt insbesondere für den Fall unterschiedlicher Spannungspotentiale zwischen dem Anschlussabschnitt der Vakuumvorrichtung sowie der jeweils weiteren Vorrichtung. Die Montage und auch Betriebssicherheit wird auf diese Weise verbessert. Beispielsweise lässt sich hierdurch eine Hochvakuumpumpe und eine mit dieser zu verbindende Vakuumkammer auf unterschiedlichen Spannungspotentialen relativ zueinander isolieren, wodurch die Sicherheit insgesamt verbessert werden kann.

Ferner ermöglicht der Einsatz eines elektrisch isolierenden Materials für das Verbindungselement, dass die Übertragung von Störsignalen zwischen dem Anschlussabschnitt und der jeweils zu verbindenden Vorrichtung vermieden werden kann. Störsignale können beispielsweise von der Steuerelektronik einer Vakuumpumpe oder einer anderen Vakuumeinrichtung ausgehen. Die Funktionssicherheit der Vakuumvorrichtung beziehungsweise der jeweils zu verbindenden Vorrichtung kann damit verbessert werden.

Vorzugsweise können auch beim Einsatz eines elektrisch isolierenden Materials für das Verbindungselement zumindest zwei Befestigungselemente zur Befestigung des Verbindungselements an dem Anschlussabschnitt vorgesehen sein, was sowohl den Handhabungsaufwand verringern kann und gleichzeitig ein hohes Maß an Befestigungssicherheit bietet.

Gemäß einer vorteilhaften Ausgestaltung kann das Verbindungselement zumindest abschnittsweise aus einem Kunststoff und/oder einem Verbundwerkstoff hergestellt sein. Bei einem solchen Verbundwerkstoff kann es sich insbesondere um einen Faserverbundwerkstoff, bevorzugt mit Kohle und/oder Glasfasern, handeln. Kunststoffe beziehungsweise Verbundwerkstoffe sind kostengünstig in der Herstellung und können eine sichere elektrische Isolierung gewährleisten. Ebenso kann durch Auswahl von Kunststoffen beziehungsweise Verbundwerkstoffen ein ausreichendes Maß an mechanischer Stabilität gewährleistet werden.

In bevorzugter Weise ist das Verbindungselement zumindest abschnittsweise aus einem Polyarylamid hergestellt, insbesondere mit einem glasfaserverstärkten Polyarylamid, bevorzugt mit einem Glasfaseranteil von 40 bis 70%, insbesondere von 50 bis 60%. In besonders bevorzugter Weise besteht das Verbindungselement aus einem Polyarylamid mit etwa 50% Glasfaseranteil. Insbesondere kann es sich um den Werkstoff Ixef® 1521 handeln.

Gemäß einer weiteren vorteilhaften Ausgestaltung kann das Verbindungselement zumindest abschnittsweise aus einem Polyphenylensulfid hergestellt sein, insbesondere aus einem glasfaserverstärkten Polyphenylensulfid, bevorzugt mit einem Glasfaseranteil von 20 bis 40%, insbesondere von 25 bis 35%, insbesondere von etwa 30%. Es kann sich hierbei insbesondere um einen Werkstoff mit der Bezeichnung Fortron® 1130L4 des Herstellers Ticona handeln.

Gemäß einer vorteilhaften Ausgestaltung der Vakuumvorrichtung ist/sind die Verbindungseinrichtung und/oder der Anschlussabschnitt für die Verbindung mit einem Kleinflansch, insbesondere einem ISO-Kleinflansch mit einer Nennweite von 10, 16, 20, 25, 32, 40 oder 50, ausgebildet. Derartige Kleinflanschverbindungen sind in besonderer Weise geeignet für das Herstellen von Gasverbindungen im Falle von Vakuumanwendungen.

Ein weiterer Aspekt der vorliegenden Erfindung betrifft eine Vakuumvorrichtungsanordnung, insbesondere eine Vakuumpumpenanordnung, mit einer voranstehend beschriebenen Vakuumvorrichtung und mit einem Flansch, der durch die Verbindungseinrichtung mit dem Anschlussabschnitt verbunden ist. Vorzugsweise weist die Vakuumvorrichtungsanordnung auch eine weitere Vorrichtung auf, die über den Flansch in einer Verbindung, insbesondere Gasverbindung, mit dem Einlass oder Auslass des Anschlussabschnitts steht. Eine solche Vakuumvorrichtungsanordnung kann mit nur geringem Handhabungsaufwand und einem hohen Maß an Sicherheit bereitgestellt werden. Insbesondere lässt sich der jeweilige Flansch einfach und sicher an dem Anschlussabschnitt in einer Fixierstellung fixieren. Für etwaige weitere Befestigungsschritte, wie zum Beispiel dem Anziehen von Befestigungsschrauben, bedarf es keiner weiteren manuellen Handhabung des Flansches. Vielmehr kann der auf diese Weise fixierte Flansch ohne manuelles Halten endgültig befestigt werden.

Gemäß einer vorteilhaften Ausgestaltung ist der Flansch über einen Zentrierring relativ zur Auslassöffnung zentriert. Dabei kann der Zentrierring in den Auslass und/oder in den Flansch eingreifen, insbesondere formschlüssig eingreifen. Eine relative Zentrierung zwischen Flansch und Auslass wird auf diese Weise vereinfacht. Der Zentrierring kann aus einem metallischen Werkstoff oder vorzugsweise aus einem elektrisch isolierenden Material hergestellt sein. Hierfür kommt insbesondere ein Kunststoff, wie zum Beispiel Polytetrafluorethylen (PTFE), in Betracht. Der Flansch kann auf diese Weise mit einer erhöhten Sicherheit gegenüber dem Anschlussabschnitt elektrisch isoliert werden.

Weiter bevorzugt kann zwischen dem Flansch und dem Anschlussabschnitt eine Dichtung vorgesehen sein. Bei einer solchen Dichtung kann es sich beispielsweise um einen Dicht-O-Ring handeln. Das Herstellen einer vakuumdichten Verbindung wird auf diese Weise vereinfacht.

Eine derartige Dichtung kann bevorzugt auf einem Zentrierring angeordnet sein, insbesondere aufgespannt sein. Hierzu kann an dem jeweiligen Zentrierring eine umlaufende Vertiefung, insbesondere mit einem etwa halbkreisförmigen Querschnitt, ausgebildet sein. Die Dichtung kann auf diese Weise sicher in dem Zentrierring gehalten werden, so dass die Montage der Vakuumvorrichtungsanordnung insgesamt vereinfacht werden kann.

Ein weiterer unabhängiger Aspekt der vorliegenden Erfindung betrifft ein Verfahren zum Herstellen einer Flanschverbindung nach Anspruch 14.

Die voranstehenden Ausführungen zu der Vakuumvorrichtung sowie zu der Vakuumvorrichtungsanordnung gelten in gleicher Weise auch für das das erfindungsgemäße Verfahren zum Herstellen einer Flanschverbindung.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine perspektivische Explosionsdarstellung einer Vakuumvorrichtung gemäß einem ersten Ausführungsbeispiel,
- Fig. 7: eine perspektivische Darstellung der Vakuumvorrichtung von Fig. 6 in zusammengesetzter Stellung,
- Fig. 8: eine perspektivische Darstellung der Vakuumvorrichtung von Fig. 7 in Fixierstellung,
- Fig. 9: eine perspektivische Explosionsdarstellung einer Vakuumvorrichtung gemäß einem weiteren Ausführungsbeispiel,
- Fig. 10: eine perspektivische Darstellung der Vakuumvorrichtung von Fig. 9 in zusammengesetzter Stellung,
- Fig. 11: eine perspektivische Darstellung der Vakuumvorrichtung von Fig. 10 vor Erreichen einer Fixierstellung,
- Fig. 12: eine perspektivische Darstellung der Vakuumvorrichtung von Fig. 11 in Fixierstellung.

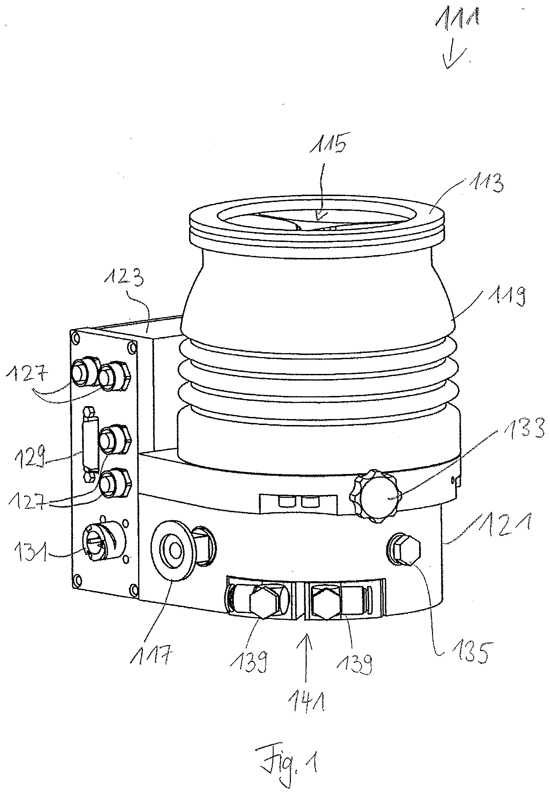

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

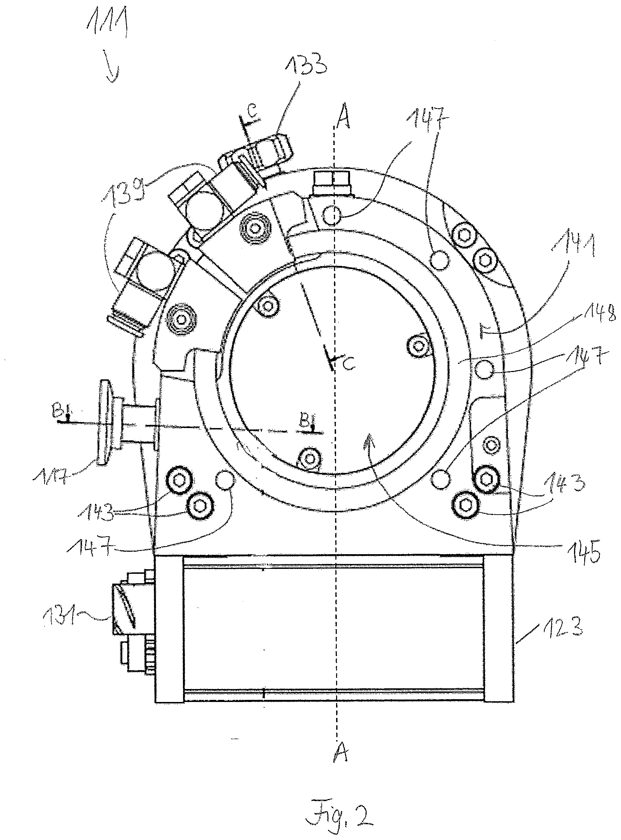

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

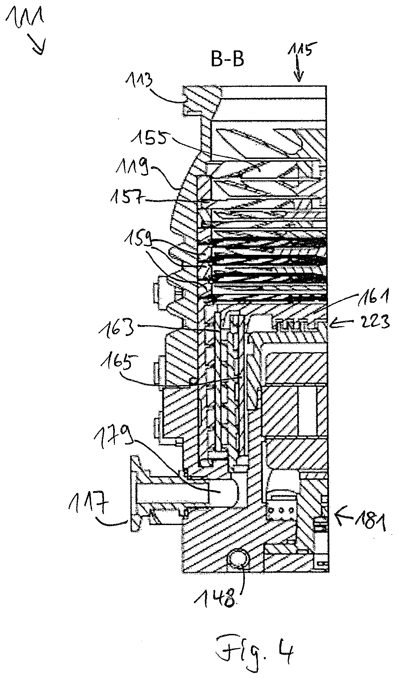

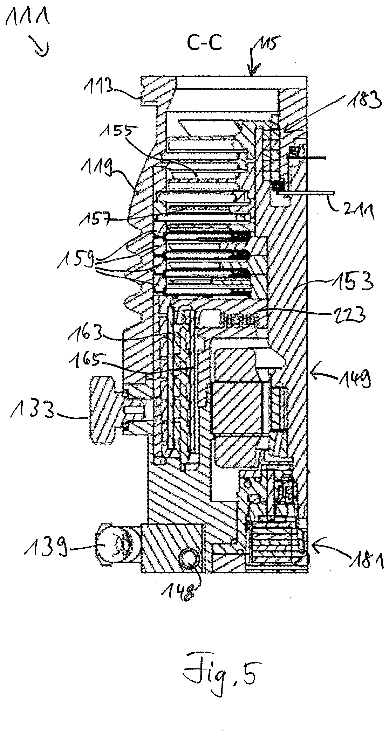

In den Figuren 2 bis 5 ist eine Kühlmittelleitung 148 dargestellt, in welcher das über die Kühlmittelanschlüsse 139 ein- und ausgeleitete Kühlmittel zirkulieren kann.

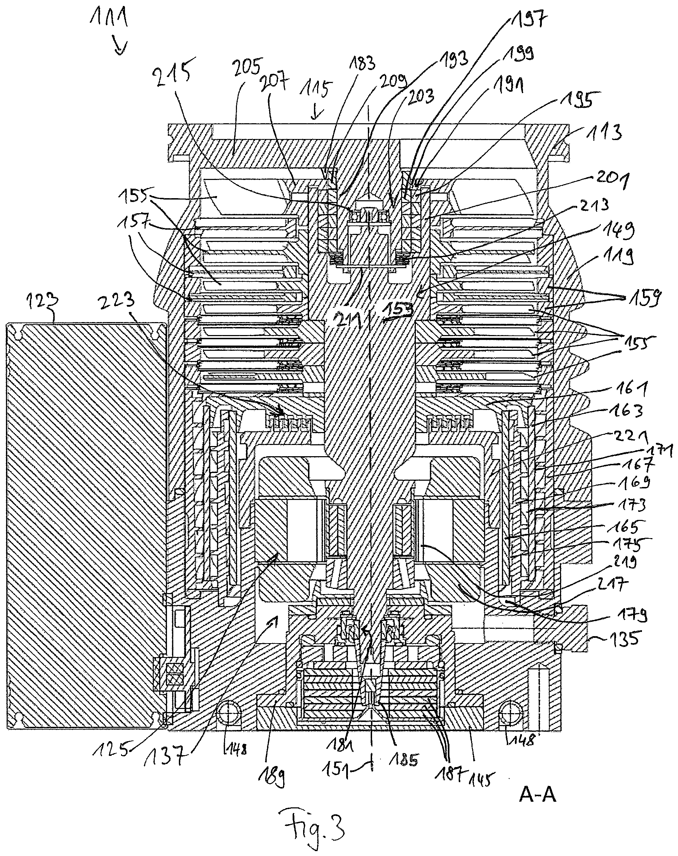

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 92 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- beziehungsweise Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

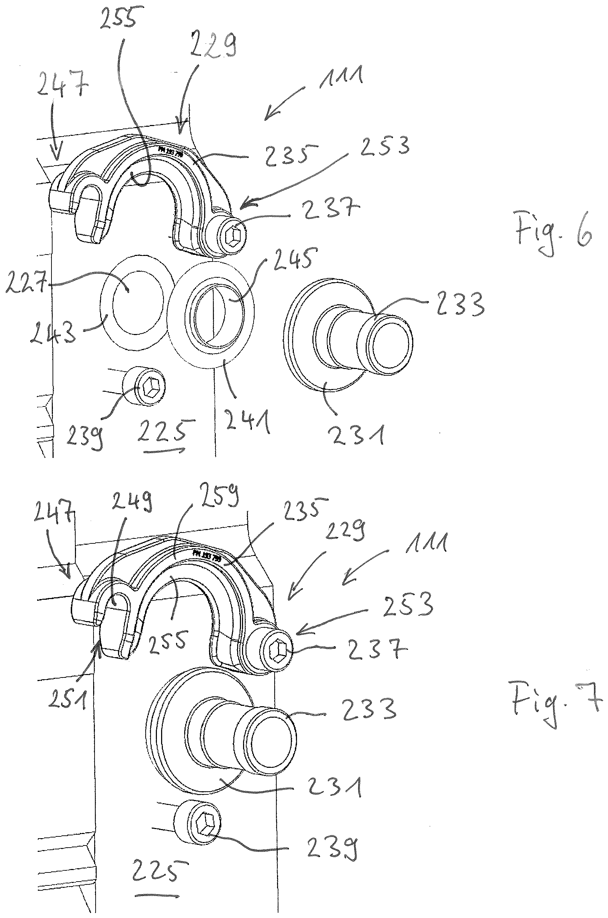

Die Turbomolekularpumpe der Fig. 1 bis 5 bildet eine erfindungsgemäße Vakuumvorrichtung beziehungsweise Teil einer erfindungsgemäßen Vakuumvorrichtungsanordnung. Die Fig. 6 bis 12 zeigen Einzelheiten, welche auch bei einer Turbomolekularpumpe gemäß den Fig. 1 bis 5 vorgesehen sein können, auch wenn diese dort nicht ausdrücklich oder sogar anders gezeigt sind.

Die Fig. 6 bis 8 zeigen eine Vakuumvorrichtung gemäß einem ersten Ausführungsbeispiel der Erfindung. Bei der Vakuumvorrichtung gemäß den Fig. 6 bis 8 kann es sich insbesondere um eine Turbomolekularpumpe 111 handeln, wie voranstehend beschrieben. Die in Fig. 6 bis 8 gezeigte Turbomolekularpumpe 111 weist zumindest einen Anschlussabschnitt 225 auf, an dem ein Auslass 227 zur Herstellung einer Gasverbindung mit einer weiteren, hier nicht gezeigten, Vorrichtung ausgebildet ist. Anstelle des Auslasses 227 kann auch ein Einlass vorgesehen sein oder der Auslass 227 kann auch als Einlass dienen. Ferner weist die Turbomolekularpumpe 111 eine Verbindungseinrichtung 229 zur Verbindung eines Flansches 231 mit dem Anschlussabschnitt 225 auf. Der Flansch 231 kann dabei insbesondere an einem rohrförmigen Bauteil 233 ausgebildet sein.

Die Verbindungseinrichtung 229 weist zumindest ein Verbindungselement 235 und zumindest zwei an dem Anschlussabschnitt 225 angeordnete Befestigungselemente 237 sowie 239 zur Befestigung des Verbindungselements 235 an dem Anschlussabschnitt 225 auf. Insbesondere handelt es sich um ein erstes Befestigungselement 237 sowie ein zweites Befestigungselement 239. Die Befestigungselemente 237 und 239 sind jeweils als Befestigungsschrauben ausgebildet und in hier nicht gezeigte Gewindebohrungen des Anschlussabschnitts 225 eingeschraubt.

Zwischen dem Flansch 231 sowie dem Anschlussabschnitt 225 kann ferner ein Dichtungsring 241 vorgesehen sein. Der Dichtungsring 241 kann dabei aus einem Elastomer hergestellt sein, um eine vakuumtaugliche Abdichtung zu gewährleisten. An dem Anschlussabschnitt 225 kann ferner ein Dichtungssitz 243 ausgebildet sein, durch den insbesondere die Sollposition des Dichtungsrings 241 vorgegeben wird. Der Dichtungssitz 243 kann insbesondere gegenüber den umliegenden Abschnitten vertieft ausgebildet sein.

Ferner kann zwischen dem Flansch 231 sowie dem Anschlussabschnitt 225 ein Zentrierring 245 angeordnet sein, der in den Flansch 231 oder in den Auslass 227 formschlüssig eingreift und somit eine relative Zentrierung zwischen Flansch 231 und Auslass 227 gewährleistet. Der Dichtungsring 241 kann dabei insbesondere auf den Zentrierring 245 aufgespannt sein, wobei der Zentrierring 245 hierzu eine umlaufende Vertiefung aufweisen kann, die hier nicht weiter dargestellt ist.

Fig. 7 zeigt einen zusammengesetzten Zustand der Vakuumvorrichtung 111 von Fig. 6. Dabei befindet sich der Flansch 231 in einer am Anschlussabschnitt 225 anliegenden Position. Das Verbindungselement 235 befindet sich in einer Freigabestellung, in der der Flansch 231 an dem Anschlussabschnitt 225 positionierbar ist, insbesondere anliegend an den Anschlussabschnitt 225 positionierbar ist.

Dementsprechend kann bei der in Fig. 7 gezeigten Freigabestellung des Verbindungselements der Flansch 231 in eine Position am Anschlussabschnitt 225 gebracht werden, die zur anschließenden Erzeugung einer Fixierstellung beziehungsweise endgültigen Befestigung geeignet ist.

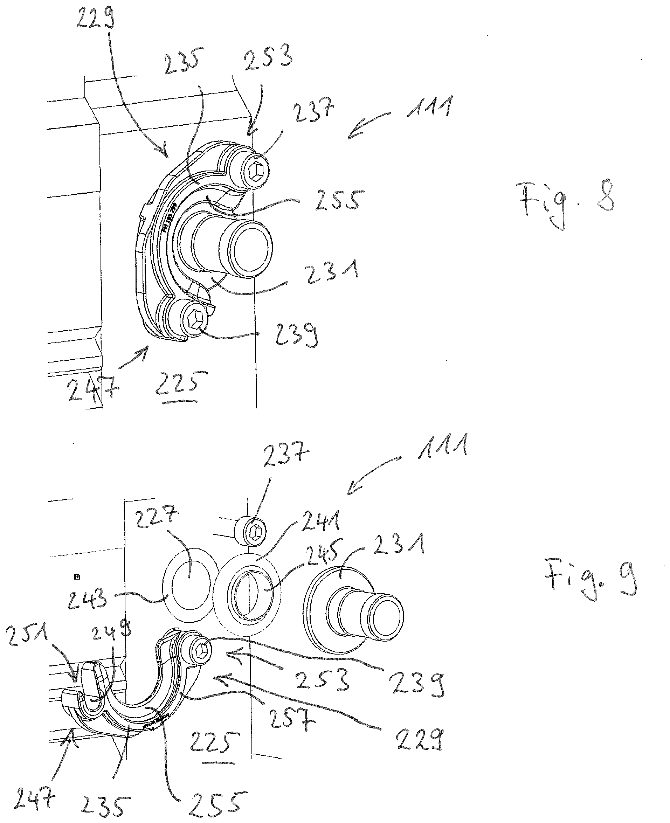

Ausgehend von der in Fig. 7 gezeigten Stellung des Verbindungselements 235 kann durch Verschwenken desselben in eine den Flansch 231 am Anschlussabschnitt 225 fixierende Fixierstellung mit dem Befestigungselement 239 in einen Befestigungseingriff versetzt werden. Eine solche Fixierstellung ist in Fig. 8 gezeigt.

In dem Ausführungsbeispiel gemäß den Fig. 6 bis 8 kann das Verbindungselement 235 zwischen einer Freigabestellung und einer Fixierstellung geschwenkt werden, wie bereits beschrieben. Hierzu ist das Verbindungselement 235 über das Befestigungselement 237 verliersicher am Anschlussabschnitt 225 angeordnet beziehungsweise befestigt. Um dieses Befestigungselement 237 herum kann das Verbindungselement 235 schwenkbar gelagert sein. Damit eine Verschwenkbarkeit des Verbindungselements 235 gewährleistet ist, kann das als Schraube ausgebildete Befestigungselement 237 nur lose angezogen sein.

Aufgrund der Ausgestaltung des Verbindungselements 235 kann dieses bei bereits am Anschlussabschnitt 225 angeordnetem Befestigungselement 239 mit diesem durch Schwenken bis in die Fixierstellung in Befestigungseingriff versetzt werden. Hierzu kann am Verbindungselement 235 ein Aufnahmeabschnitt 247 ausgebildet sein, der eine Öffnung 249 mit einer Umfangsunterbrechung 251 aufweist. Bei der Öffnung 249 kann es sich somit um eine maulförmig geöffnete Ausbuchtung handeln, welche insbesondere hin zum schmalen Rand des Verbindungselements 235 geöffnet ist. Die Öffnung 249 kann folglich mit dem Befestigungselement 239, welches bereits am Anschlussabschnitt 225 vorgesehen ist, insbesondere in den Anschlussabschnitt 225 eingeschraubt ist, in Befestigungseingriff gebracht werden. Das Befestigungselement 239 kann hierzu über die Umfangsunterbrechung 251 in die Öffnung 249 gelangen, wie der Fig. 8 entnommen werden kann.

Das Verbindungselement 235 weist ferner einen Aufnahmeabschnitt 253 auf, der eine hier nicht gezeigte Öffnung mit geschlossenem oder im Wesentlichen geschlossenem Umfang aufweist. Auf diese Weise kann eine verliersichere Anordnung des Verbindungselements 235 an dem Anschlussabschnitt 225 über das Befestigungselement 237 sichergestellt werden. Insbesondere wird so vermieden, dass das Befestigungselement 237 in einer in den Anschlussabschnitt 225 eingeschraubten und durch die Öffnung des Aufnahmeabschnitts 253 hindurchgeführten Stellung seitlich aus dieser herausgeführt werden kann.

Den Fig. 6 bis 8 kann ferner entnommen werden, dass das Verbindungselement 235 bogenförmig beziehungsweise C-förmig ausgebildet ist. Hierdurch kann der Flansch 231 umgriffen werden, insbesondere um etwa 180°. Ferner kann an einem Innenumfang des Verbindungselements 235 ein kragenartiger Vorsprung 255 ausgebildet sein, der in einer in Fig. 8 gezeigten Fixierstellung den Flansch 231 formschlüssig hintergreift. Der kragenartige Vorsprung 255 kann ferner von einer in den Fig. 6 bis 8 nicht zu sehenden Stützfläche des Verbindungselements 235, welche insbesondere dem Anschlussabschnitt 225 zugewandt ist und an diesem anliegt, beabstandet sein. Durch eine solche Beabstandung zwischen kragenartigem Vorsprung 255 und Stützfläche zur Abstützung an dem Anschlussabschnitt 225 kann die Kraftbeaufschlagung des Flanschs durch das Festziehen der als Schrauben ausgebildeten Befestigungselemente 237 und 239 in geeigneter Weise definiert werden.

In einer in Fig. 8 gezeigten Fixierstellung kann durch Festziehen der als Schrauben ausgebildeten Befestigungselemente 237 und 239 eine vakuumdichte Flanschverbindung hergestellt werden. Ebenso besteht die Möglichkeit, dass durch geeignete Voreinstellung der Befestigungselemente 237 und 239 beziehungsweise durch geeignete Formgebung des kragenartigen Vorsprungs 255 bereits durch Erreichen einer Fixierstellung die endgültige Befestigungslage des Verbindungselements 235 beziehungsweise des Flanschs 231 erreicht wird.

Bei der Ausführungsform gemäß den Fig. 6 bis 8 erfolgt das Schwenken des Verbindungselements 235 bis in die Fixierstellung entgegen des Uhrzeigersinns. Den Fig. 9 bis 12 ist nun eine Ausführungsform zu entnehmen, gemäß der das Schwenken des Verbindungselements 235 bis in eine Fixierstellung im Uhrzeigersinn erfolgt. Dabei kann das Verbindungselement 235 identisch zu demjenigen der Fig. 6 bis 8 ausgebildet sein. Ein und dasselbe Verbindungselement 235 kann folglich für Anordnungen eingesetzt werden, in denen ein Schwenken in eine Fixierstellung im Uhrzeigersinn oder gegen den Uhrzeigersinn erfolgt. Hierzu kann das Fixierelement 235 symmetrisch ausgebildet sein, insbesondere relativ zu einer Symmetrieebene, die parallel zum Anschlussabschnitt 225 beziehungsweise entlang der Bewegungs- beziehungsweise Schwenkorientierung verläuft.

Folglich ist in den Fig. 9 bis 12 eine Stützfläche 257 des Verbindungselements 235 zu sehen, welche in der Ausführungsform gemäß Fig. 6 bis 8 zur Anlage mit dem Anschlussabschnitt 225 gelangt. Gleichzeitig ist in den Fig. 6 bis 8 eine Stützfläche 259 zu sehen, welche in der Anordnung gemäß Fig. 9 bis 12 zur Anlage an den Anschlussabschnitt 225 gelangt.

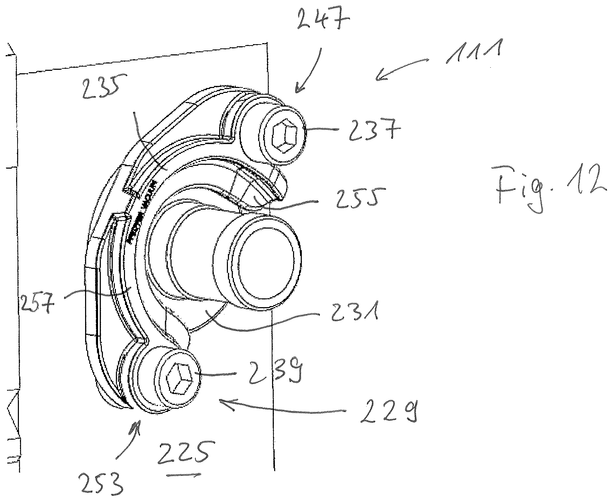

Ferner kann den Fig. 9 bis 12 entnommen werden, dass das Verbindungselement 235 über das Befestigungselement 239 verliersicher am Anschlussabschnitt 225 befestigt ist. Durch Bewegen in eine Fixierstellung, die in Fig. 12 gezeigt ist, kann das Verbindungselement 235 mit dem Befestigungselement 237, welches ebenfalls am Anschlussabschnitt 225 angeordnet ist, insbesondere in den Anschlussabschnitt 225 eingeschraubt ist, in einen Befestigungseingriff versetzt werden.

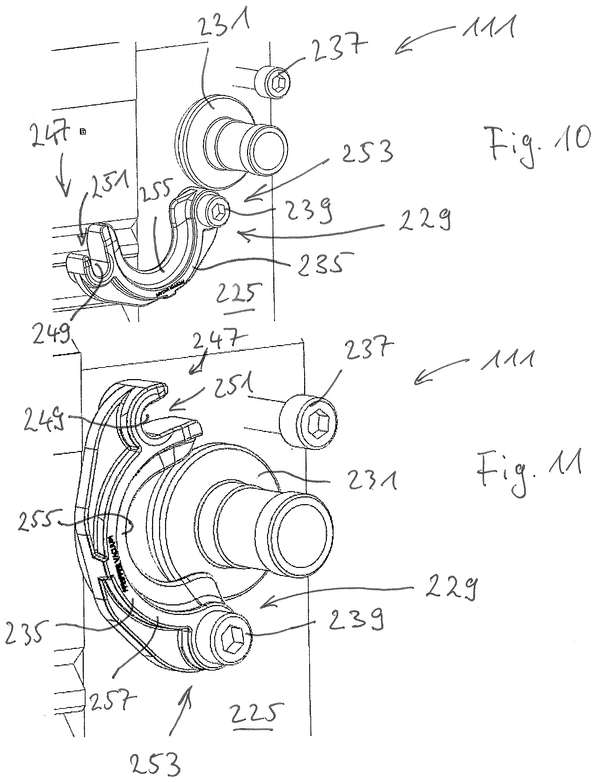

Wie voranstehend bereits erwähnt, erfolgt in diesem Fall das Schwenken in die Fixierstellung im Uhrzeigersinn. Fig. 10 zeigt dabei eine zusammengesetzte Stellung mit dem am Anschlussabschnitt 225 angeordneten Flansch 231 und dem Verbindungselement 235 in einer Freigabestellung.

Fig. 11 zeigt eine teilweise geschwenkte Stellung des Verbindungselements 235, bei dem die Fixierstellung noch nicht vollständig erreicht ist. In Fig. 12 ist zu sehen, dass das Verbindungselement 235 vollständig bis in die Fixierstellung geschwenkt ist und somit in einem Befestigungseingriff mit dem Befestigungselement 237 versetzt worden ist. In der in Fig. 12 gezeigten Stellung kann schließlich durch Festschrauben der als Schrauben ausgebildeten Befestigungselemente 237 und 239 eine vakuumdichte Verbindung zwischen dem Flansch 231 und dem Anschlussabschnitt 225 erzeugt werden.

Die in den Fig. 6 bis 12 beispielhaft gezeigten Vorrichtungen und Komponenten sowie die in der Beschreibungseinleitung allgemein beschriebenen Konzepte können ebenso bei den Ausführungsformen gemäß den Fig. 1 bis 5 vorgesehen sein, obwohl dort nicht näher oder sogar anders dargestellt beziehungsweise erläutert. Dies gilt für sämtliche Details bezüglich des Anschlussabschnitts 225, des darin ausgebildeten Auslasses 227, der Verbindungseinrichtung 229 sowie aller weiteren relevanten Komponenten. Insbesondere kann es sich bei dem Auslass 227 um den in den Fig. 1 bis 5 gezeigten Pumpenauslass 117 handeln. Der Pumpenauslass 117 kann dementsprechend gemäß dem Auslass 227 an einem erfindungsgemäßen Anschlussabschnitt 225 vorgesehen sein, was in den Fig. 1 bis 5 nicht beziehungsweise anders dargestellt ist. Ebenso können sämtliche oder einzelne Details der in den Fig. 1 bis 5 dargestellten und entsprechend beschriebenen Turbomolekularpumpe 111 auch bei Ausführungsformen gemäß Fig. 6 bis 12 vorgesehen sein.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- beziehungsweise Fanglager
- 217: Motorstator
- 219: Zwischenraum
- 221: Wandung
- 223: Labyrinthdichtung
- 225: Anschlussabschnitt
- 227: Auslass
- 229: Verbindungseinrichtung
- 231: Flansch
- 233: Rohrelement
- 235: Verbindungselement
- 237: Befestigungselement
- 239: Befestigungselement
- 241: Dichtung
- 243: Dichtungssitz
- 245: Zentrierring
- 247: Aufnahmeabschnitt
- 249: Ausnehmung
- 251: Umfangsunterbrechung
- 253: Aufnahmeabschnitt
- 255: Vorsprung
- 257: Stützfläche
- 259: Stützfläche

## Patentansprüche

1. Vakuumvorrichtung (111), insbesondere Vakuumpumpe, Vakuummessgerät, Lecksuchgerät und/oder Vakuumkammergerät, mit zumindest einem Anschlussabschnitt (225), an dem ein Einlass oder Auslass (227) zur Herstellung einer Verbindung mit einer weiteren Vorrichtung ausgebildet ist, und mit einer Verbindungseinrichtung (229) zur Verbindung eines Flansches (231) mit dem Anschlussabschnitt (225), wobei die Verbindungseinrichtung (229) zumindest ein Verbindungselement (235) und zumindest zwei an dem Anschlussabschnitt (225) angeordnete Befestigungselemente (237, 239) für das Verbindungselement (235) aufweist, wobei das Verbindungselement (235) wenigstens zwei Aufnahmeabschnitte (247, 253) für die Befestigungselemente (237, 239) aufweist und zumindest einer der Aufnahmeabschnitte (247) eine Öffnung (249) mit einer Umfangsunterbrechung (251) aufweist und wobei das Verbindungselement (235) an dem einen der Befestigungselemente (237, 239) schwenkbar gelagert ist,
**dadurch gekennzeichnet, dass**
das Verbindungselement durch Verschwenken in eine den Flansch (231) am Anschlussabschnitt (225) fixierende Fixierstellung mit dem anderen der Befestigungselemente (237, 239) durch seitliches Einführen des anderen der Befestigungselemente (237, 239) in die Öffnung (249) mit der Umfangsunterbrechung (251) in einen Befestigungseingriff versetzbar ist.

2. Vakuumvorrichtung (111) nach Anspruch 1,
wobei das Verbindungselement (235) verliersicher am Anschlussabschnitt (225) angeordnet ist, insbesondere über eines der Befestigungselemente (237, 239) und/oder in einer vormontierten Stellung.

3. Vakuumvorrichtung (111) nach Anspruch 1 oder 2,
wobei das Verbindungselement (235) in einer verliersicheren Anordnung an dem Anschlussabschnitt (225) zwischen einer Freigabestellung und der Fixierstellung schwenkbar ist, insbesondere schwenkbar geführt ist, wobei in der Freigabestellung der Flansch (231) an dem Anschlussabschnitt (225) positionierbar und in der Fixierstellung der Flansch (231) an dem Anschlussabschnitt fixiert ist, insbesondere vorläufig fixiert ist.

4. Vakuumvorrichtung (111) nach zumindest einem der vorstehenden Ansprüche,
wobei einer der Aufnahmeabschnitte (253) eine Öffnung mit geschlossenem oder im Wesentlichen geschlossenem Umfang aufweist.

5. Vakuumvorrichtung (111) nach zumindest einem der vorstehenden Ansprüche,
wobei das Verbindungselement (235) für das zumindest abschnittsweise Umgreifen des Flansches (231) ausgebildet ist und/oder wobei das Verbindungselement (235) den Flansch (231) in der Fixierstellung zumindest abschnittsweise umgreift, insbesondere um mehr als 90°, bevorzugt um mehr als 120°, weiter bevorzugt um mehr als 150°, insbesondere um etwa 180° umgreift.

6. Vakuumvorrichtung (111) nach zumindest einem der vorstehenden Ansprüche,
wobei das Verbindungselement (235) bogenförmig und/oder C-förmig ausgebildet ist und/oder wobei die Aufnahmeabschnitte (247, 253) für die Befestigungselemente (237, 239) an gegenüberliegenden Enden des Verbindungselements (235) ausgebildet sind und/oder die Umfangsunterbrechung (251) der Öffnung (249) eines Aufnahmeabschnitts (247) an einem freien Ende des Verbindungselements (235) ausgebildet ist.

7. Vakuumvorrichtung (111) nach zumindest einem der vorstehenden Ansprüche,
wobei das Verbindungselement (235) symmetrisch ausgebildet ist, insbesondere bezüglich einer Symmetrieebene, die mit einer Bewegungsebene, entlang der das Verbindungselement (235) in die Fixierstellung bewegbar und/oder an dem Anschlussabschnitt (225) beweglich geführt und/oder schwenkbar angeordnet ist, zusammenfällt oder parallel zur Bewegungsebene verläuft, und/oder asymmetrisch bezüglich einer senkrecht zur Bewegungsebene verlaufenden Symmetrieebene.

8. Vakuumvorrichtung (111) nach zumindest einem der vorstehenden Ansprüche,
wobei die Befestigungselemente (237, 239) als Schrauben ausgebildet und in Gewindebohrungen des Anschlussabschnitts (225) eingeschraubt sind, wobei durch Festziehen der Schrauben in der Fixierstellung des Verbindungselements (235) der Flansch endgültig mit dem Anschlussabschnitt verbindbar ist, insbesondere zur Herstellung einer vakuumdichten Verbindung zwischen dem Flansch und dem Anschlussabschnitt.

9. Vakuumvorrichtung (111) nach zumindest einem der vorstehenden Ansprüche,
wobei das Verbindungselement (235) zumindest abschnittsweise aus einem elektrisch isolierenden Material hergestellt ist.

10. Vakuumvorrichtung (111) nach zumindest einem der vorstehenden Ansprüche,
wobei das Verbindungselement (235) zumindest abschnittsweise aus einem Kunststoff und/oder einem Verbundwerkstoff, insbesondere einem Faserverbundwerkstoff, bevorzugt mit Kohle- und/oder Glasfasern, hergestellt ist.

11. Vakuumvorrichtung (111) nach zumindest einem der vorstehenden Ansprüche,
wobei das Verbindungselement (235) zumindest abschnittsweise aus einem Polyarylamid hergestellt ist, insbesondere einem glasfaserversärkten Polyarylamid, bevorzugt mit einem Glasfaseranteil von 40% bis 70%, insbesondere von 50% bis 60%, und/oder wobei das Verbindungselement (235) zumindest abschnittsweise aus einem Polyphenylensulfid hergestellt ist, insbesondere einem glasfaserversärkten Polyphenylensulfid, bevorzugt mit einem Glasfaseranteil von 20% bis 40%, insbesondere von 25% bis 35%, insbesondere von etwa 30%.

12. Vakuumvorrichtungsanordnung, insbesondere Vakuumpumpenanordnung, mit einer Vakuumvorrichtung (111) nach zumindest einem der vorstehenden Ansprüche, mit einem Flansch (231), der durch die Verbindungseinrichtung (235) mit dem Anschlussabschnitt (225) verbunden ist, und vorzugsweise mit einer weiteren Vorrichtung, die über den Flansch (231) in einer Verbindung mit dem Einlass oder Auslass (227) des Anschlussabschnitts (225) steht.

13. Vakuumvorrichtungsanordnung nach Anspruch 12,
wobei der Flansch (231) über einen Zentrierring (245) relativ zum Auslass (227) zentriert ist und/oder wobei zwischen dem Flansch (231) und dem Anschlussabschnitt (225) eine Dichtung (241) vorgesehen ist, wobei die Dichtung (241) bevorzugt auf einem Zentrierring (245) angeordnet ist, insbesondere aufgespannt ist, und/oder an einem Dichtungssitz 243 des Anschlussabschnitts (225) anliegt.

14. Verfahren zum Herstellen einer Flanschverbindung, insbesondere zwischen einer Vakuumvorrichtung (111) nach einem der Ansprüche 1 bis 11 und einer weiteren Vorrichtung, bei dem an einem Anschlussabschnitt (225) einer Vakuumvorrichtung (111) zwei Befestigungselemente (237, 239) vorgesehen werden, bei dem ein Verbindungselement (235) durch eines der Befestigungselemente (237, 239) schwenkbar an dem Anschlussabschnitt (225) gelagert wird und bei dem das Verbindungselement (235) durch Verschwenken in eine einen Flansch (231) am Anschlussabschnitt (225) fixierende Fixierstellung mit dem anderen der Befestigungselemente (237, 239) durch seitliches Einführen des anderen der Befestigungselemente (237, 239) in eine eine Umfangsunterbrechung (251) aufweisende Öffnung (249) des Verbindungselements (235) in einen Befestigungseingriff versetzt wird.

## Claims

1. A vacuum apparatus (111), in particular a vacuum pump, a vacuum measurement device, a leak detector and/or a vacuum chamber device, comprising at least one connector section (225), at which an inlet or an outlet (227) is formed for establishing a connection with a further apparatus, and a connection device (229) for connecting a flange (231) to the connector section (225), wherein the connection device (229) has at least one connection element (235) and at least two fastening elements (237, 239) for the connection element (235) which are arranged at the connector section (225),
wherein the connection element (235) has at least two reception sections (247, 253) for the fastening elements (237, 239) and at least one of the reception sections (247) has an opening (249) having a peripheral interruption (251), and wherein the connection element (235) is pivotably supported at the one of the fastening elements (237, 239),
**characterized in that**, by pivoting into a fixing position fixing the flange (231) at the connector section (225), the connection element can be set into a fastening engagement with the other one of the fastening elements (237, 239) by a lateral insertion of the other one of the fastening elements (237, 239) into the opening (249) having the peripheral interruption (251).

2. A vacuum apparatus (111) in accordance with claim 1,
wherein the connection element (235) is captively arranged at the connector section (225), in particular via one of the fastening elements (237, 239) and/or in a preassembled position.

3. A vacuum apparatus (111) in accordance with claim 1 or claim 2,
wherein, in a captive arrangement at the connector section (225), the connection element (235) is pivotable, in particular is pivotably guided, between a release position and the fixing position, wherein the flange (231) can be positioned at the connector section (225) in the release position and the flange (231) is fixed, in particular is provisionally fixed, at the connector section in the fixing position.

4. A vacuum apparatus (111) in accordance with at least one of the preceding claims,
wherein one of the reception sections (253) has an opening having a closed or substantially closed periphery.

5. A vacuum apparatus (111) in accordance with at least one of the preceding claims,
wherein the connection element (235) is configured for at least sectionally engaging around the flange (231), and/or wherein the connection element (235) at least sectionally engages around the flange (231) in the fixing position, in particular by more than 90°, preferably by more than 120°, further preferably by more than 150°, in particular by approximately 180°.

6. A vacuum apparatus (111) in accordance with at least one of the preceding claims,
wherein the connection element (235) is arcuate and/or C-shaped, and/or wherein the reception sections (247, 253) for the fastening elements (237, 239) are formed at oppositely disposed ends of the connection element (235) and/or the peripheral interruption (251) of the opening (249) of a reception section (247) is formed at a free end of the connection element (235).

7. A vacuum apparatus (111) in accordance with at least one of the preceding claims,
wherein the connection element (235) is formed symmetrically, in particular with respect to a plane of symmetry which coincides with a movement plane, along which the connection element (235) is movable into the fixing position and/or is movably guided and/or pivotably arranged at the connector section (225), or which is aligned in parallel with the movement plane, and/or said connection element (235) is formed asymmetrically with respect to a plane of symmetry extending perpendicular to the movement plane.

8. A vacuum apparatus (111) in accordance with at least one of the preceding claims,
wherein the fastening elements (237, 239) are configured as screws and are screwed into threaded bores of the connector section (225), wherein the flange can finally be connected to the connector section by tightening the screws in the fixing position of the connection element (235), in particular in order to establish a vacuum-tight connection between the flange and the connector section.

9. A vacuum apparatus (111) in accordance with at least one of the preceding claims,
wherein the connection element (235) is at least sectionally produced from an electrically insulating material.

10. A vacuum apparatus (111) in accordance with at least one of the preceding claims,
wherein the connection element (235) is at least sectionally produced from a plastic and/or a composite material, in particular a fiber composite material, preferably having carbon fibers and/or glass fibers.

11. A vacuum apparatus (111) in accordance with at least one of the preceding claims,
wherein the connection element (235) is at least sectionally produced from a polyarylamide, in particular a glass fiber-reinforced polyarylamide, preferably having a glass fiber portion of 40% to 70%, in particular of 50% to 60%, and/or wherein the connection element (235) is at least sectionally produced from a polyphenylene sulfide, in particular a glass fiber-reinforced polyphenylene sulfide, preferably having a glass fiber content of 20% to 40%, in particular of 25% to 35%, in particular of approximately 30%.

12. A vacuum apparatus arrangement, in particular a vacuum pump arrangement, having a vacuum apparatus (111) in accordance with at least one of the preceding claims, having a flange (231) which is connected to the connector section (225) by the connection device (235), and preferably having a further apparatus which is in connection with the inlet or outlet (227) of the connector section (225) via the flange (231).

13. A vacuum apparatus arrangement in accordance with claim 12,
wherein the flange (231) is centered relative to the outlet (227) via a centering ring (245), and/or wherein a seal (241) is provided between the flange (231) and the connector section (225), wherein the seal (241) is preferably arranged on, in particular stretched onto, a centering ring (245) and/or contacts a seal seat (243) of the connector section (225).

14. A method of establishing a flange connection, in particular between a vacuum apparatus (111) in accordance with any one of the claims 1 to 11 and a further apparatus, in which two fastening elements (237, 239) are provided at a connector section (225) of a vacuum apparatus (111); in which a connection element (235) is pivotably supported at the connector section (225) by one of the fastening elements (237, 239); and in which, by pivoting into a fixing position fixing the flange (231) at the connector section (225), the connection element (235) can be set into a fastening engagement with the other one of the fastening elements (237, 239) by a lateral insertion of the other one of the fastening elements (237, 239) into an opening (249) of the connection element (235) having a peripheral interruption (251).

## Revendications

1. Dispositif à vide (111), en particulier pompe à vide, appareil de mesure du vide, appareil de détection de fuites et/ou appareil à chambre à vide, comportant au moins une portion de raccordement (225) sur laquelle est réalisée une entrée ou une sortie (227) pour établir une liaison avec un autre dispositif, et un moyen de liaison (229) pour relier une bride (231) à la portion de raccordement (225),
dans lequel
le moyen de liaison (229) comprend au moins un élément de liaison (235) et au moins deux éléments de fixation (237, 239), disposés sur la portion de raccordement (225), pour l'élément de liaison (235), et
l'élément de liaison (235) présente au moins deux portions de réception (247, 253) pour les éléments de fixation (237, 239), et l'une au moins des portions de réception (247) présente une ouverture (249) ayant une interruption de pourtour (251), et
l'élément de liaison (235) est monté de manière pivotante sur l'un des éléments de fixation (237, 239),
**caractérisé en ce que**
par pivotement dans une position de fixation fixant la bride (231) à la portion de raccordement (225), l'élément de liaison peut être amené en prise de fixation avec l'autre des éléments de fixation (237, 239) par introduction latérale de l'autre desdits éléments de fixation (237, 239) dans l'ouverture (249) ayant l'interruption de pourtour (251).

2. Dispositif à vide (111) selon la revendication 1,
dans lequel
l'élément de liaison (235) est disposé de manière imperdable sur la portion de raccordement (225), en particulier par l'intermédiaire de l'un des éléments de fixation (237, 239), et/ou dans une position prémontée.

3. Dispositif à vide (111) selon la revendication 1 ou 2,
dans lequel
en disposition imperdable sur la portion de raccordement (225), l'élément de liaison (235) peut être pivoté, en particulier être guidé de manière pivotante, entre une position de libération et la position de fixation, et
dans la position de libération, la bride (231) peut être positionnée sur la portion de raccordement (225) et, dans la position de fixation, la bride (231) est fixée, en particulier provisoirement, à la portion de raccordement.

4. Dispositif à vide (111) selon l'une au moins des revendications précédentes,
dans lequel
l'une desdites portions de réception (253) présente une ouverture ayant un pourtour fermé ou sensiblement fermé.

5. Dispositif à vide (111) selon l'une au moins des revendications précédentes,
dans lequel
l'élément de liaison (235) est réalisé pour entourer au moins localement la bride (231), et/ou
en position de fixation, l'élément de liaison (235) entoure au moins localement la bride (231), en particulier sur plus de 90°, de préférence sur plus de 120°, de manière particulièrement préférée sur plus de 150°, en particulier sur environ 180°.

6. Dispositif à vide (111) selon l'une au moins des revendications précédentes,
dans lequel
l'élément de liaison (235) est en forme d'arc et/ou en forme de C, et/ou les portions de réception (247, 253) pour les éléments de fixation (237, 239) sont réalisées aux extrémités opposées de l'élément de liaison (235), et/ou une interruption de pourtour (251) de l'ouverture (249) d'une portion de réception (247) est réalisée à une extrémité libre de l'élément de liaison (235).

7. Dispositif à vide (111) selon l'une au moins des revendications précédentes,
dans lequel
l'élément de liaison (235) est réalisé symétriquement, en particulier par rapport à un plan de symétrie qui coïncide avec un plan de mouvement le long duquel l'élément de liaison (235) peut être déplacé jusque dans la position de fixation et/ou est guidé de manière mobile et/ou disposé de manière pivotante sur la portion de raccordement (225), ou qui s'étend parallèlement au plan de mouvement, et/ou ledit élément est réalisé asymétriquement par rapport à un plan de symétrie qui s'étend perpendiculairement audit plan de mouvement.

8. Dispositif à vide (111) selon l'une au moins des revendications précédentes,
dans lequel
les éléments de fixation (237, 239) sont réalisés sous forme de vis et sont vissés dans des alésages taraudés de la portion de raccordement (225), et la bride peut être reliée de manière définitive à la portion de raccordement par serrage des vis dans la position de fixation de l'élément de liaison (235), en particulier pour établir une liaison étanche au vide entre la bride et la portion de raccordement.

9. Dispositif à vide (111) selon l'une au moins des revendications précédentes,
dans lequel
l'élément de liaison (235) est réalisé au moins localement en un matériau électriquement isolant.

10. Dispositif à vide (111) selon l'une au moins des revendications précédentes,
dans lequel
l'élément de liaison (235) est réalisé au moins localement en une matière plastique et/ou en un matériau composite, en particulier en matériau composite à base de fibres, de préférence avec des fibres de carbone et/ou de verre.

11. Dispositif à vide (111) selon l'une au moins des revendications précédentes,
dans lequel
l'élément de liaison (235) est réalisé au moins localement en un polyarylamide, en particulier en un polyarylamide renforcé par des fibres de verre, de préférence avec une teneur en fibres de verre de 40 % à 70 %, en particulier de 50 % à 60 %, et/ou
l'élément de liaison (235) est réalisé au moins localement en un sulfure de polyphénylène, en particulier en un sulfure de polyphénylène renforcé par des fibres de verre, de préférence avec une teneur en fibres de verre de 20 % à 40 %, en particulier de 25 % à 35 %, en particulier d'environ 30 %.

12. Ensemble de dispositif à vide, en particulier ensemble de pompe à vide, comportant un dispositif à vide (111) selon l'une au moins des revendications précédentes, comportant une bride (231) qui est reliée à la portion de raccordement (225) par le moyen de liaison (235), et de préférence un autre dispositif qui est en liaison avec l'entrée ou la sortie (227) de la portion de raccordement (225) par l'intermédiaire de la bride (231).

13. Ensemble de dispositif à vide selon la revendication 12,
dans lequel
la bride (231) est centrée par rapport à la sortie (227) par l'intermédiaire d'une bague de centrage (245), et/ou
un joint d'étanchéité (241) est prévu entre la bride (231) et la portion de raccordement (225), le joint d'étanchéité (241) étant de préférence disposé, en particulier serré, sur une bague de centrage (245) et/ou s'appuyant sur un siège pour joint (243) de la portion de raccordement (225).

14. Procédé pour réaliser une liaison à bride, en particulier entre un dispositif à vide (111) selon l'une des revendications 1 à 11 et un autre dispositif,
dans lequel
deux éléments de fixation (237, 239) sont prévus sur une portion de raccordement (225) d'un dispositif à vide (111) dans lequel un élément de liaison (235) est monté de manière pivotante sur la portion de raccordement (225) par l'un des éléments de fixation (237, 239) et dans lequel, par pivotement jusque dans une position de fixation fixant une bride (231) à la portion de raccordement (225), l'élément de liaison (235) est mis en prise de fixation avec l'autre des éléments de fixation (237, 239) par introduction latérale de l'autre desdits éléments de fixation (237, 239) dans une ouverture (249) de l'élément de liaison (235) ayant une interruption de pourtour (251).
